**Europäisches Patentamt**

**European Patent Office**

**Office européen des brevets**

(19)

(11) **EP 1 213 945 A1**

(12) **DEMANDE DE BREVET EUROPEEN**

(43) Date de publication:
**12.06.2002 Bulletin 2002/24**

(51) Int Cl.⁷: **H04Q 11/00**

(21) Numéro de dépôt: **01402658.7**

(22) Date de dépôt: **15.10.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **07.12.2000 FR 0015889**

(71) Demandeur: **ALCATEL**
**75008 Paris (FR)**

(72) Inventeurs:
• **Le Sauze, Nicholas**
**91440 Bures-Sur-Yvette (FR)**
• **Chiaroni, Dominique**
**92160 Antony (FR)**
• **Jourdan, Amaury**
**92310 Servers (FR)**
• **Zami, Thierry**
**91300 Massy (FR)**

(74) Mandataire: **Sciaux, Edmond et al**
**COMPAGNIE FINANCIERE ALCATEL**
**Dépt. Propr. Industrielle,**
**30, avenue Kléber**
**75116 Paris (FR)**

(54) **Routeur de paquets pour réseau de transmission optique**

(57) Des paquets porteurs d'informations sont reçus par un routeur par l'intermédiaire de ports d'entrée (E1... E6) qui leur imposent des ondes porteuses optiques dont les longueurs d'onde correspondent à ces ports. Un ensemble à retards (RA, RB) applique à ces paquets des retards respectifs et un ensemble de diffusion (D) les diffuse à des moyens de sélection spatiale (SR) qui les transmettent à des moyens de sélection spectrale (SL). Des moyens d'amplification sont distribués sur les trajets de ces paquets et ces trajets sont organisés de manière à limiter le nombre des interrupteurs optiques à semi conducteurs des moyens de sélection et à minimiser à la fois le bruit et la diaphotie affectant ces paquets.

Cette invention s'applique aux télécommunications.

Fig.2

EP 1 213 945 A1

## Description

La présente invention concerne notamment les réseaux de transmission d'informations utilisant des fibres optiques. Chaque noeud d'un tel réseau reçoit des signaux qui proviennent notamment d'autres noeuds du même réseau. Ces signaux sont optiques, c'est à dire qu'ils sont portés par des ondes optiques, et ils seront dits ci après « d'entrée ». De même ce noeud émet, notamment à destination des autres noeuds, d'autres tels signaux qui seront dits ci après « de sortie ». Ces signaux de sortie sont respectivement équivalents à ces signaux d'entrée en ce sens qu'ils portent les mêmes informations ; mais leur ordre de succession et les longueurs d'onde de leurs ondes porteuses peuvent être différents. Des correspondances doivent être établies entre d'une part les sources d'où proviennent les signaux d'entrée et d'autre part les destinations vers lesquelles les signaux de sortie équivalents doivent être émis.

Dans les réseaux qui utilisent une transmission du type dit asynchrone, par exemple ceux qui utilisent des protocoles connus tels que ATM et IP, les signaux à transmettre présentent la forme de paquets. Les dites correspondances à établir sont alors réalisées par un organe de gestion ou contrôleur inclus pour cela dans le noeud et ce dernier est alors appelé routeur. Les informations nécessaires à ce routeur pour assurer sa fonction lui sont notamment fournies par des étiquettes qui sont respectivement propres à ces paquets et qui peuvent par exemple être incluses en tête des paquets ou être portées par des ondes affectées à cette fonction.

Un tel routeur a d'une part des ports d'entrée par lesquels il reçoit des paquets et d'autre part des ports de sortie par lesquels il transmet des paquets équivalents à ces paquets d'entrée. Le nombre de ces ports de sortie est typiquement le même que celui de ces ports d'entrée. Une « capacité » du routeur est définie. Elle est constituée par le produit du nombre de ces ports d'entrée par le débit d'information pouvant être transmis par le routeur via chacun de ces ports. Pour porter les paquets entre ses ports d'entrée et ses ports de sortie le routeur utilise des ondes porteuses dont les longueurs d'onde constituent des longueurs d'onde de travail de ce routeur. Pour sélectionner un trajet et éventuellement une durée de trajet pour chacun de ces paquets entre un port d'entrée et un port de sortie, il inclut des interrupteurs qui sont usuellement constitués par des amplificateurs optiques à semiconducteurs.

Lors de la réalisation d'un réseau de transmission utilisant un tel routeur, il est souhaité que le nombre des abonnés pouvant utiliser ce réseau soit aussi grand que possible, et il en est de même pour le débit d'informations pouvant être transmis entre ces abonnés. Il est souhaité pour cela que la capacité des routeurs inclus dans ce réseau soit accrue. Mais un accroissement de la capacité d'un tel routeur de type connu nécessite un accroissement équivalent du nombre de longueurs d'onde de travail de ce routeur et donc celui des longueurs d'onde des ondes porteuses reçues par chacun de ses interrupteurs optiques. Dans un tel interrupteur l'accroissement de ce dernier nombre peut entraîner un mélange à quatre ondes provoquant une diaphotie. Le nombre de tels interrupteurs est par ailleurs nécessairement accru. L'accroissement de la capacité du routeur est alors limité à la fois par le risque de diaphotie et par le coût de réalisation du routeur et notamment par celui des interrupteurs optiques nécessaires à cette réalisation.

Un premier tel routeur est connu par un article « A 2.56-Tb/s Multiwavelength and Scalable Switch-Fabric for Fast Packet-Switching Networks », Yoshiharu Maeno et al., IEEE Photonics Technology Letters, vol. 10, n°8, August 1998. Il présente notamment l'inconvénient de ne pas permettre de sélectionner une durée de trajet pour chacun des paquets.

Un deuxième tel routeur est connu par un article « A 160 Gbit/s throughput photonic switch for fast packet switching systems », D. Chiaroni, D. de Bouard, C. Chauzat, J.C. Jacquinot, D. Bayart, P. Bousselet, M. Bachman and M. Sotom, Photonics In Switching, 1977, Technical Digest Series, vol. 10, p 37- 40. Il présente notamment l'inconvénient que le nombre des interrupteurs optiques nécessaires à sa réalisation croît fortement avec l'accroissement de sa capacité.

Chacun de ces deux routeurs connus présente de plus l'inconvénient de ne pas limiter autant que cela serait utile le bruit et la diaphotie qui affectent les paquets en sortie du routeur.

La présente invention a notamment pour but de permettre d'accroître la capacité d'un tel routeur et/ou de limiter son coût de réalisation tout en limitant le bruit et le risque de diaphotie.

Comme connu, le routeur de cette invention inclut des ports d'entrée pour recevoir des paquets et pour les transmettre avec des longueurs d'onde de support optiques en correspondance avec ces ports d'entrée et il inclut en outre un ensemble d'entrée appliquant des retards à ces paquets et les diffusant à des moyens de sélection spatiale recevant ces paquets et les transmettant à des moyens de sélection spectrale, tous ces moyens faisant sur commande des sélections parmi les paquets qu'ils reçoivent. Ces derniers moyens font ces sélections selon des assemblages spectraux prédéterminés. Chacun de ces assemblages a au moins une longueur d'onde et il inclut les paquets ayant une longueur d'onde de support égale à une longueur d'onde de cet assemblage, chacun des paquets étant inclus dans l'un de ces assemblages. Le routeur transmet en sortie des paquets issus de ces sélections. Le routeur de cette invention est caractérisé par le fait que son ensemble d'entrée coopère avec ses ports d'entrée pour répartir les paquets en une pluralité de groupes constitués chacun par certains de ces paquets. Le nombre de longueurs d'onde de support des paquets de chacun de ces groupes est une fraction du nombre de ces ports d'entrée et constitue un nombre de longueurs d'onde de ce groupe. La coopération de cet ensemble d'entrée avec ces ports d'entrée est telle que le nombre des assemblages spectraux selon lesquels les moyens de sélection spectrale de ce routeur font des sélections est égal au plus grand des nombres de longueurs d'onde de ces groupes.

A l'aide des figures schématiques ci-jointes, on va exposer ci après par des exemples comment cette invention peut être mise en oeuvre. Lorsqu'un même élément ou un élément assurant des mêmes fonctions est représenté sur plusieurs de ces figures, il y est désigné par les mêmes lettres et/ou chiffres de référence.

La figure 1 représente le deuxième routeur connu précédemment mentionné.

La figure 2 représente un premier routeur réalisé selon cette invention.

La figure 3 représente un deuxième routeur réalisé selon cette invention.

La figure 4 représente un mode de réalisation alternatif d'un bloc de sélection du premier ou du deuxième routeur réalisés selon cette invention.

La figure 5 représente un autre mode de réalisation alternatif d'un tel bloc de sélection.

La figure 6 représente un ensemble d'amplification optique commutée pouvant être inclus dans le premier ou le deuxième routeur réalisés selon cette invention.

Dans le but de faciliter la compréhension du dessin, les routeurs représentés sont des routeurs simplifiés qui ont tous un même nombre de ports d'entrée et un même nombre de ports de sortie égaux à six, et ils appliquent aux paquets qu'ils traitent un même nombre de retards égal à deux. Mais cette invention trouve avantageusement application pour des valeurs plus élevées de ces nombres.

Dans le même but certains amplificateurs optiques n'ont pas été représentés. Mais de tels amplificateurs sont en fait nécessaires pour compenser les pertes de puissance optique subies par les paquets, notamment dans chacun des diffuseurs inclus dans ces routeurs.

Des dispositions présentées par certains routeurs de paquets vont tout d'abord être décrites. Elles sont communes au deuxième routeur connu et aux deux routeurs réalisés selon cette invention.

Selon ces dispositions communes, un tel routeur est adapté à être inclus dans un réseau de transmission d'informations acheminant des signaux constituant respectivement des paquets. Chacun de ces paquets porte des informations à transmettre et est muni d'une étiquette de routage. Lorsqu'il sera dit ci-après qu'un tel paquet a une longueur d'onde de support, cela indiquera que ce paquet est porté au cours de son trajet dans le routeur par une onde optique ayant cette longueur d'onde.

Typiquement le réseau de transmission incluant ce routeur est un réseau à fibres optiques organisé selon un mode de transfert asynchrone. Dans un tel mode de transfert les paquets se succèdent en divers points du réseau avec des intervalles de temps qui dépendent du trafic du réseau et qui ne sont donc pas nécessairement uniformes.

Ce routeur est optique en ce sens que ces paquets y sont maintenus et restitués sous forme optique, c'est à dire que chaque paquet transitant dans ce routeur y est à chaque instant porté par une onde porteuse optique. Typiquement c'est aussi sous forme optique que ces paquets sont reçus. Mais un tel paquet pourrait être reçu sous une forme différente, par exemple sous forme électrique.

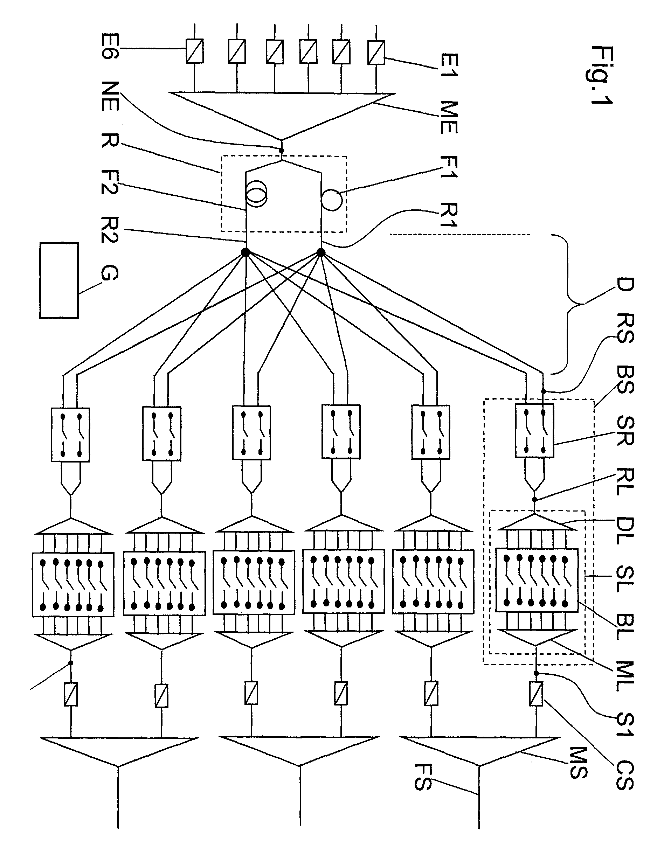

Conformément aux **figures 1 à 3** ce routeur inclut une pluralité de ports d'entrée E1... E6. Chacun de ces ports d'entrée a l'une des longueurs d'onde de travail du routeur et il est disposé pour recevoir des dits paquets se succédant au cours du temps.

Dans le cas d'un réseau utilisant des multiplex, par exemple des multiplex spectraux, plusieurs ports d'entrée peuvent être alimentés par une même fibre optique guidant un tel multiplex, c'est à dire que chacun de ces ports peut recevoir de tels paquets à partir de cette fibre. D'un coté réception de ces ports, les ports alimentés par une telle fibre sont alors par exemple respectivement associés aux diverses longueurs d'onde de ce multiplex pour recevoir chacun les paquets ayant dans ce multiplex la longueur d'onde de support à laquelle ce port est associé de ce coté réception.

Chacun des ports d'entrée recevant un paquet est apte à le transmettre tout en imposant à sa longueur d'onde de support d'être égale en sortie de ce port à la longueur d'onde de ce port.

Pour que chaque tel paquet ait une telle longueur d'onde de support en sortie d'un tel port alors qu'en entrée de ce port, s'il était sous forme optique, sa longueur d'onde de support serait le plus souvent différente de la longueur d'onde de ce port, et pour que, de plus, il retrouve une qualité de signal convenable après des dégradations subies en ligne, les ports d'entrée sont typiquement constitués par des régénérateurs de type connu réalisant en outre une conversion de longueur d'onde.

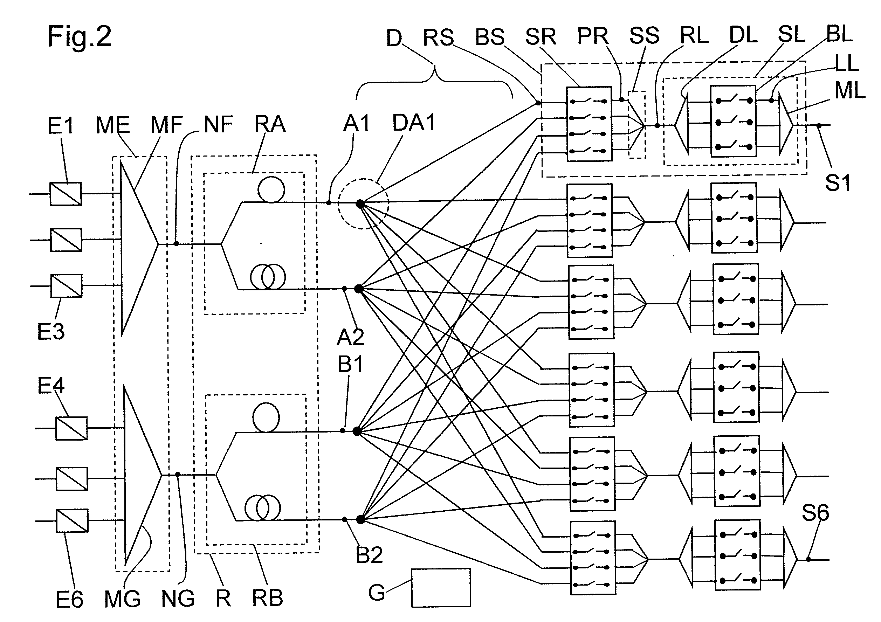

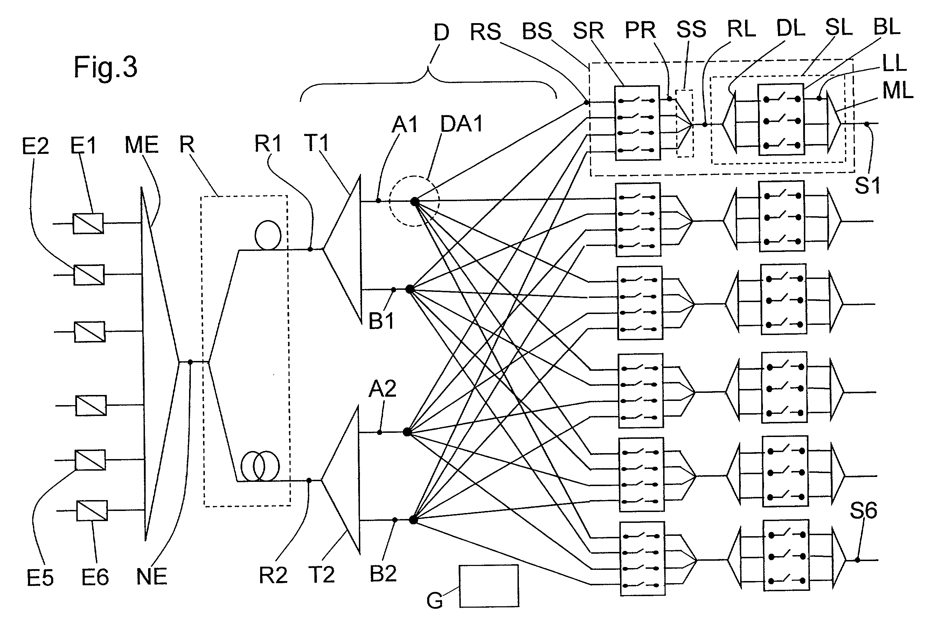

Ce routeur inclut ensuite un ensemble de multiplexage d'entrée et un ensemble à retard. L'ensemble de multiplexage d'entrée ME est disposé pour recevoir les paquets en sortie des ports d'entrée. Il a au moins une sortie telle que NE sur les **figures** 1 et 3 ou NF et NG sur la **figure 2**. Il est adapté à transmettre sur chaque telle sortie des paquets ayant été reçus par cet ensemble et ayant des longueurs d'onde de support respectives mutuellement différentes.

L'ensemble à retards R est disposé pour recevoir les paquets en sortie de l'ensemble de multiplexage d'entrée. Il transmet ces paquets par une pluralité d'éléments de retards ayant des retards respectifs, à une pluralité correspondante de sorties, telles que R1 et R2 sur les **figures 1** et **3** et A1 et A2 ou B1 et B2 sur la **figure**

**2,** qui suivent ces éléments, et qui constituent des bornes internes primaires, respectivement. Chacun de ces paquets est transmis sur chacune de ces bornes avec le retard de l'élément de retard qui précède cette borne, ce retard constituant un retard de cette borne. Dans les dits routeurs simplifiés un premier tel retard est celui des bornes R1, A1 et B1 et un deuxième tel retard est celui des bornes R2, A2 et B2.

Le nombre k des retards mutuellement différents appliqués par l'ensemble à retards est choisi en fonction des caractéristiques du trafic du réseau incluant le routeur. Dans les routeurs réels il est typiquement voisin de 16 et généralement inférieur à 32. Ces retards forment une succession dans laquelle ils ont des rangs respectifs, cette succession débutant par un premier retard. Typiquement cette succession est régulière, c'est à dire que, sauf ce premier retard, chacun de ces retards est égal à un retard précédent augmenté d'un incrément de retard prédéterminé indépendant du rang de ce retard précédent. De préférence, sensiblement, le premier retard est nul de sorte que chaque retard est égal au dit incrément de retard multiplié par le rang de ce retard diminué de un. Cet incrément de retard est choisi en fonction du format des paquets et des caractéristiques du trafic prévu pour le routeur.

Une telle succession de retards est facilement réalisée à l'aide d'un bloc à retards tel que R sur les **figures 1** et **3** ou tel que RA ou RB sur la **figure** 2. Un tel bloc inclut une succession de lignes à retards qui sont constituées par des fibres optiques de longueurs étagées, telles que F1 et F2 sur la **figure 1**,et qui constituent les dits éléments de retard. Chacune de ces fibres raccorde alors la sortie de l'ensemble de multiplexage d'entrée à l'une des bornes internes primaires. Un tel bloc a été parfois appelé « mémoire tampon optique ».

Ce routeur inclut ensuite un ensemble de diffusion et une pluralité de blocs de sélection.

L'ensemble de diffusion D raccorde chacune des bornes internes primaires à une pluralité de bornes de distribution telles que RS. Il sera considéré ci-après que chacune de ces bornes de distribution a un retard constitué par le retard de cette borne interne primaire, étant entendu qu'aucun retard supplémentaire n'est appliqué aux paquets par cet ensemble ou ces bornes de distribution.

L'ensemble de multiplexage d'entrée, l'ensemble à retards et l'ensemble de diffusion, constituent un ensemble d'entrée qui coopère avec les ports d'entrée E1... E6 pour former des liaisons reliant ces ports à ces bornes de distribution.

Chacun des blocs de sélection tels que BS a, pour chacun des dits retards, une entrée constituée par une borne de distribution telle que RS ayant ce retard. Il sera considéré ci-après que cette entrée a elle aussi ce retard. Les dites liaisons sont telles que, pour chacun de ces blocs, chacun des paquets reçus par l'un de ces ports est transmis par une de ces liaisons à une des entrées de ce bloc. Ce bloc reçoit des ordres de sélection désignant ce bloc, chacun de ces ordres désignant en outre l'un des dits ports d'entrée et l'une de ses entrées de ce bloc. Il répond à chacun de ces ordres en sélectionnant l'un des paquets reçus sur cette entrée. La longueur d'onde de support de ce paquet sélectionné est la longueur d'onde du port désigné par cet ordre. Ce bloc a une sortie et il est adapté à transmettre le paquet sélectionné sur cette sortie. Il inclut pour cela un sélecteur de borne de distribution SR et un sélecteur de longueur d'onde SL.

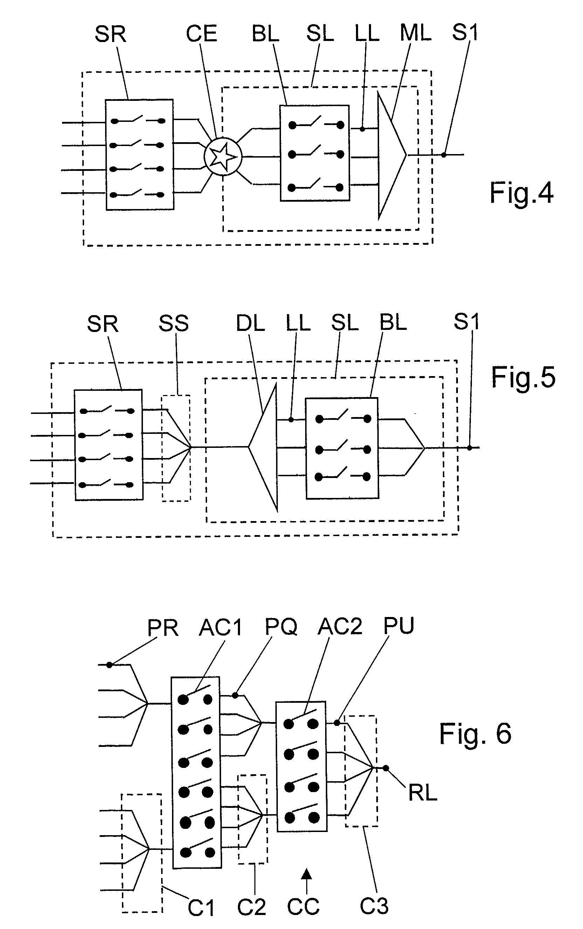

Le sélecteur de borne de distribution SR a d'une part une pluralité d'entrées respectivement constituées par les entrées telles que RS de ce bloc et d'autre part une sortie RL. Sur les figures, cette sortie est représentée sous la forme d'une borne commune d'un combineur SS du type (k.b):1 placé en sortie du sélecteur SR. Le nombre b sera défini ci-après. Il vaut 1 dans le cas de la **figure 1**. Il vaut 2 dans celui des **figures 2** et **3** sur lesquelles ce combineur est désigné par les lettres de référence SS. Mais, selon une disposition alternative et parfois avantageuse représentée à la **figure 4**, la sortie RL peut être constituée par la borne commune au moins virtuelle d'un coupleur étoile du type tel que (k.b):(n/b). Lorsque ce bloc de sélection reçoit un ordre de sélection désignant ce bloc et l'une de ces entrées, ce sélecteur répond à cet ordre en raccordant sa sortie RL à cette entrée telle que RS. Pour le paquet qui est alors transmis sur cette sortie, il en résulte que le retard qui lui a été appliqué par l'ensemble R est celui de cette entrée. Chaque ordre de sélection sélectionne ainsi l'un des retards de l'ensemble R.

Le sélecteur de longueur d'onde SL a une entrée constituée par la sortie RL du sélecteur de borne de distribution et il a une sortie S1 constituant ladite sortie du bloc de sélection. Lorsque le bloc de sélection BS reçoit un ordre de sélection désignant ce bloc, ce sélecteur répond à cet ordre en transmettant de son entrée à sa sortie sélectivement celui des paquets dont la longueur d'onde de support est la longueur d'onde du port d'entrée désigné par cet ordre.

Typiquement ce sélecteur de longueur d'onde inclut des moyens de séparation de longueurs d'onde et un sélecteur de borne de longueur d'onde BL. Dans un premier cas représenté à la **figure 4**, ces moyens sont constitués par un séparateur spectral ML raccordé en sortie de ce sélecteur. Dans un deuxième cas représenté à la **figure 5**, Ils sont constitués par un tel séparateur DL raccordé en entrée de ce sélecteur. Dans un troisième cas représenté aux **figures 1** à **3** et préféré pour faciliter une distribution des moyens d'amplification optique, ces mêmes moyens sont constitués par deux tels séparateurs raccordés l'un DL en entrée et l'autre ML en sortie de ce sélecteur.

Chaque séparateur spectral a d'une part une borne commune telle que RL ou S1 et d'autre part une pluralité de bornes constituant des bornes de longueur d'onde respectivement associées à certaines au moins des longueurs d'onde de travail du routeur. Il transmet sélectivement entre cette borne commune et chacune de ces bornes de longueur d'onde ceux des paquets dont la longueur d'onde de support est associée à cette borne. Un tel séparateur est de préférence constitué par un multiplexeur ou un démultiplexeur de type connu.

Dans les dits premier et deuxième cas, le sélecteur de borne de longueurs d'onde BL a d'une part une borne commune et d'autre part une pluralité de bornes de longueur d'onde qui sont alors celles de l'unique séparateur spectral. Dans le premier cas où cet unique séparateur est raccordé en sortie de ce sélecteur, ce dernier se raccorde au sélecteur de borne de distribution SR par l'intermédiaire du coupleur étoile de la disposition alternative de la **figure 4**. La sortie du sélecteur de longueur d'onde SL est alors la borne commune de l'unique séparateur spectral ML. Dans le deuxième cas où l'unique séparateur DL est raccordé en entrée de ce sélecteur de borne BL, la borne commune RL de ce séparateur constitue à la fois la sortie du sélecteur de borne de distribution SR et l'entrée du sélecteur de longueur d'onde SL. La sortie du sélecteur de longueur d'onde SL est alors la borne commune du sélecteur de borne de longueurs d'onde BL. Dans ledit troisième cas, le sélecteur de borne de longueurs d'onde BL a d'une part une pluralité de bornes d'entrée respectivement constituées par les bornes de longueur d'onde du séparateur spectral raccordé à son entrée et d'autre part une pluralité de bornes de sortie respectivement constituées par les bornes de longueur d'onde du séparateur spectral raccordé à sa sortie. Lorsque ce bloc de sélection reçoit un ordre de sélection désignant ce bloc et un port d'entrée, ce sélecteur répond à cet ordre en raccordant sélectivement, soit dans les dits premier et deuxième cas, sa borne commune éventuellement virtuelle à celle des bornes de longueurs d'onde qui est associée à la longueur d'onde de ce port, soit, dans le troisième cas, l'une de ses bornes d'entrée à l'une de ses bornes de sortie, ces bornes étant celles qui sont associées à la longueur d'onde de ce port.

Dans les trois cas, l'entrée et la sortie du sélecteur de longueur d'onde sont respectivement constituées par deux dites bornes communes du sélecteur de borne de longueur d'onde et/ou d'un séparateur spectral.

De préférence chacun des deux dits sélecteurs de borne est constitué par une succession d'interrupteurs optiques et chacun de ces interrupteurs présente la forme d'un amplificateur optique à semi-conducteur. Les ordres de sélection commandent alors les courants électriques d'alimentation de ces amplificateurs. Typiquement tous les interrupteurs d'un même sélecteur de borne sont intégrés sur une même barrette semi-conductrice.

Des ports de sortie du routeur sont respectivement constitués par les sorties S1...S6 des blocs de sélection.

Pour former les ordres de sélection le routeur inclut enfin un organe de gestion G sensible à la fois aux étiquettes de routage des paquets reçus par le routeur et à des données de trafic reçues par ailleurs du réseau de transmission. Cet organe répond à l'étiquette de routage de chacun des paquets reçus par chacun de ces ports d'entrée en émettant un ordre de sélection concernant ce paquet. Cet ordre désigne ce port et l'un au moins des blocs de sélection et il sélectionne en outre l'un des retards selon les données de trafic. Cet organe est typiquement constitué par un ensemble électronique de traitement d'information. Il reçoit les données des étiquettes de routage par l'intermédiaire de coupleurs optiques et de transducteurs optoélectroniques non représentés. Ces coupleurs sont placés en amont de l'ensemble de multiplexage d'entrée et éventuellement en amont des ports d'entrée.

Dans chacun des deux routeurs réalisés selon cette invention, des amplificateurs à fibres du type EDFA sont typiquement raccordés en série à la sortie de chaque multiplexeur d'entrée tel que ME ou à chaque sortie d'un bloc à retards tel que R. Des amplificateurs peuvent aussi être raccordés en série à la borne de sortie de chaque sélecteur de borne de distribution tel que SR dans le cas où cette borne est individualisée telle que la borne RL, ou, alternativement, en sortie de chaque bloc de sélection tel que BS.

Typiquement des convertisseurs de sortie tels que CS sur la **figure 1** sont respectivement raccordés aux ports de sortie tels que S1 pour recevoir les paquets sélectionnés par les blocs de sélection tels que BS. De même que les convertisseurs des ports d'entrée, ces convertisseurs de sortie ont des longueurs d'onde respectives qu'ils imposent en tant que longueurs d'onde de support aux paquets qu'ils transmettent. Ces longueurs d'onde sont typiquement prédéterminées et elles sont choisies pour permettre la suite de l'acheminement de ces paquets dans le réseau, dans le cadre de multiplex de longueurs d'onde. Chaque tel multiplex est formé par un multiplexeur de sortie tel que MS. Ce multiplexeur reçoit les paquets provenant de plusieurs blocs de sélection par l'intermédiaire de plusieurs convertisseurs de longueur d'onde tels que CS dont les longueurs d'onde de sortie sont étagées, l'ensemble de ces blocs et convertisseurs constituant un module de sélection associé à ce multiplexeur. Le multiplex formé est ensuite guidé par une fibre optique de sortie telle que FS. De tels convertisseurs, multiplexeurs et fibres de sortie sont de même raccordés en sortie des routeurs des **figures 2** et **3**, mais ils ne sont pas représentés.

Tous les modules de sélection peuvent inclure un même nombre d de blocs de sélection. Chaque fibre de sortie guide alors un multiplex constitué par des paquets ayant le même nombre de longueurs d'onde de support respectives. Si le nombre de ces modules est c , le produit c x d est typiquement égal au nombre n des ports d'entrée.

Conformément à la **figure 1** ledit deuxième routeur connu présente les dispositions communes décrites ci avant et il présente de plus les dispositions plus particulières suivantes :

- Le nombre des longueurs d'onde de travail est égal au nombre n des ports d'entrée, ces ports ayant respectivement ces longueurs d'onde.
- L'ensemble de multiplexage d'entrée est constitué par un multiplexeur de type connu constituant un multiplexeur d'entrée.
- Le nombre des entrées de chacun des blocs de sélection, est le nombre k des retards de l'ensemble à retards.
- Le nombre des longueurs d'onde de support des paquets transmis par chacune de ces bornes est le nombre n des ports d'entrée.

Il résulte des dispositions particulières ci-dessus que, dans chaque bloc de sélection, le nombre des interrupteurs du sélecteur de borne de distribution est le nombre k des retards de l'ensemble à retards et que celui des interrupteurs du sélecteur de borne de longueur d'onde est le nombre n des longueurs d'onde de travail.

Il a été souhaité que le nombre n des ports d'entrée d'un tel routeur soit aussi grand que possible. Mais il est apparu difficile de donner économiquement à ce nombre les valeurs accrues telles que 32 ou 64, du moins lorsque le nombre k a une valeur telle que 16 ou 32, le produit k x n devant rester inférieur à 1024. La difficulté pour cela résulte du fait qu'une fraction sensible du coût du routeur serait alors liée au nombre k + n des interrupteurs qui doivent être inclus dans les sélecteurs de borne de chaque bloc de sélection et qui doivent être commandés individuellement par l'organe de gestion. De plus le nombre des longueurs d'onde vues par certains des interrupteurs optiques du routeur serait alors excessif, par exemple égal à 32, ce qui provoquerait le phénomène parasite de mélange à quatre ondes au sein de ces interrupteurs et entraînerait donc une diaphotie.

Selon la présente invention les liaisons formées par l'ensemble d'entrée en coopération avec les ports d'entrée réalisent d'une part un partage de l'ensemble de ces ports d'entrée en une pluralité de groupes d'entrée constitués chacun d'une pluralité de ces ports et d'autre part un partage de l'ensemble des bornes de distribution en une pluralité de groupes internes respectivement associés à ces groupes d'entrée et incluant chacun au moins une telle borne. Les longueurs d'onde des ports de chacun de ces groupes d'entrée forment une succession de longueurs d'onde mutuellement différentes et respectivement propres à une succession de ces ports. Chaque borne de distribution de chacun de ces groupes internes constitue une borne de ce groupe et ce groupe inclut plusieurs telles bornes, les retards respectifs de ces bornes formant une succession de retards mutuellement différents. Les dits partages sont réalisés par le fait que ces liaisons relient les ports d'un groupe d'entrée seulement aux bornes du groupe interne associé à ce groupe d'entrée et qu'elles relient ces bornes seulement à ces ports.

Chacun des groupes de paquets précédemment mentionnés est constitué par les paquets qui sont reçus par l'un des groupes d'entrée et qui transitent donc dans le routeur par le groupe interne associé à ce groupe d'entrée. Il est alors associé à ce groupe d'entrée et à ce groupe interne et le mot groupe pourra désigner ci-après aussi bien un tel groupe de paquets que le groupe d'entrée ou le groupe interne associés à ce groupe de paquets.

De préférence les nombres respectifs des ports inclus dans les divers groupes d'entrée sont voisins les uns des autres. Plus particulièrement, la différence entre chacun de ces nombres de ports et le rapport n/b du nombre total n des ports d'entrée au nombre b de ces groupes reste de préférence inférieure en valeur absolue à ce nombre de groupes conformément à l'inégalité

$$n/b - b < g < n/b + b$$

dans la quelle g désigne le nombre des ports inclus dans l'un quelconque des groupes d'entrée. Dans le cas typique où n est divisible par b, tous les groupes d'entrée ont de préférence un même nombre n/b de ports d'entrée et tel sera le cas considéré ci-après.

La succession de retards est de préférence une succession régulière telle que décrite ci avant et le nombre k de retards de cette succession est choisi comme précédemment indiqué. Chaque sélecteur de borne de distribution a alors, pour chacun des b groupes, un nombre k d'entrées raccordées respectivement à autant de bornes de distribution de ce groupe. C'est à dire que le nombre de ses entrées et donc celui de ses interrupteurs optiques est le produit k x b. Par ailleurs le nombre des longueurs d'onde de support dans chaque groupe est celui des ports d'entrée de ce groupe, c'est à dire qu'il est égal au quotient n/b. Le nombre des interrupteurs optiques de chaque sélecteur de borne de longueur d'onde est égal à ce nombre de longueurs d'onde c'est à dire qu'il est égal à ce quotient. Le nombre total des interrupteurs optiques dans chacun des n blocs de sélection est donc donné par l'expression :

$$k.b + n/b$$

Si on fait varier le nombre b cette expression présente un minimum pour

$$b^2 = n/k$$

C'est pourquoi, de préférence, dans le but de limiter le nombre des interrupteurs optiques dans chaque bloc de sélection et donc le nombre total de ces interrupteurs dans le routeur, le nombre b des groupes d'entrée est compris entre 25% et 400% et de préférence encore voisin de 100% de la racine carrée √n/k du rapport du nombre n des ports d'entrée au nombre k des retards de la dite succession de retards, ceci seulement si le rapport n/b qui en résulte ne dépasse pas 16. Dans tous les cas, dans le but d'éviter le phénomène de mélange à quatre ondes, le nombre b est choisi pour que ce rapport n/b ne dépasse pas sensiblement 16 et pour qu'il en soit de même de chacun des nombres g des ports respectivement inclus dans les groupes d'entrée.

Typiquement, dans le cadre des possibilités techniques de ce jour le nombre b des groupes d'entrée est au moins égal à deux et au plus égal à 64. Par exemple b =2 si n=32 et k=8 et le nombre d'interrupteurs optiques dans chacun des n=32 blocs de sélection est alors

$$8 \times 2 + 32/2 = 32$$

alors que, pour les mêmes valeurs de n et de k, le nombre de ces interrupteurs dans chaque tel bloc du deuxième routeur connu est

$$8 + 32 = 40.$$

De même b=4 si n=64 et k=6 et le nombre correspondant d'interrupteurs est

$$6 \times 4 + 64/4 = 40$$

alors que dans le même routeur connu il est

$$6+64 = 70.$$

Dans le premier routeur réalisé selon cette invention une séparation spatiale des groupes est faite en amont de l'ensemble de multiplexage d'entrée ME.

Ce premier routeur présente les dispositions particulières ci-après qui apparaissent à la **figure 2 :**

Les longueurs d'onde des ports d'entrée forment une succession spectrale λ1... λp constituée de longueurs d'onde mutuellement différentes dans chacun des groupes d'entrée et au moins une majorité des longueurs d'onde de cette succession est incluse dans la succession spectrale correspondante de chacun des autres groupes d'entrée.

Si, par exemple, et comme représenté, b=2 et le nombre n est pair, les deux groupes d'entrée E1...E3 et E4... E6 ont la même dite succession spectrale λ1... λp et le nombre p des longueurs d'onde dans cette succession est p = n/2.

L'ensemble de multiplexage d'entrée ME inclut un multiplexeur d'entrée pour chacun des groupes d'entrée, c'est à dire par exemple deux multiplexeurs d'entrée MF et MG. Ces multiplexeurs constituent respectivement des multiplexeurs de ces groupes. Chacun d'eux est disposé pour recevoir les paquets transmis par les ports de son groupe et pour les multiplexer en longueur d'onde. Il a une sortie pour transmettre ces paquets multiplexés.

L'ensemble à retards R inclut pour chacun de ces groupes d'entrée un bloc à retards tels que les deux blocs RA et RB pour recevoir ces paquets multiplexés. Pour chacun des dits retards ce bloc a une borne interne primaire ayant ce retard.

L'ensemble de diffusion D inclut, non plus seulement pour chacun des retards, mais aussi pour chacun des blocs à retards, un diffuseur tel que DA1 raccordant la borne interne primaire telle que A1 ayant ce retard à une pluralité de bornes de distribution raccordée à cette borne interne primaire. Ce diffuseur constitue un diffuseur de cette borne interne primaire. Il raccorde cette borne interne primaire à n bornes de distribution telles que RS. Un tel diffuseur est connu sous le nom de « coupleur de diffusion » ou « splitter ».

Enfin les entrées de chacun des blocs de sélection incluent un groupe de ces entrées de bloc pour chacun des groupes d'entrée et chacun de ces groupes d'entrées de bloc inclut une de ces entrées pour chacune des bornes internes primaires. Cette entrée est constituée par l'une des bornes de distribution et elle est raccordée à cette borne interne primaire par l'intermédiaire du diffuseur de cette dernière.

Dans ce premier routeur réalisé selon cette invention, les assemblages spectraux ont chacun une seule longueur d'onde. Ce routeur présente l'avantage d'une limitation du nombre des assemblages spectraux selon lesquels les moyens de sélection spectrale tels que le sélecteur SL doivent faire des sélections, et par conséquent du nombre des interrupteurs optiques devant être inclus dans chaque tel sélecteur pour faire ces sélections. Grâce aux dispositions ci-dessus, chacun de ces nombres peut être limité au rapport n/b.

Dans le deuxième routeur réalisé selon cette invention, la séparation spatiale des groupes est faite dans l'ensemble de diffusion, ce qui présente l'avantage de simplifier l'ensemble à retards.

Ce deuxième routeur présente les dispositions particulières ci-après qui apparaissent à la **figure 3 :**

- Les longueurs d'onde des ports d'entrée E1... E6 forment une seule succession spectrale λ1...λn constituée de longueurs d'onde mutuellement distinctes.
- L'ensemble de multiplexage d'entrée inclut un seul multiplexeur ME disposé pour recevoir les paquets transmis par les ports d'entrée et pour multiplexer ces paquets en longueur d'onde et cet ensemble a une seule sortie pour transmettre ces paquets multiplexés.
- L'ensemble à retards inclut un seul bloc à retards R disposé pour recevoir ces paquets multiplexés, et ce bloc a, pour chacun des dits retards, une borne interne primaire telle que R1 ou R2 ayant ce retard.

- L'ensemble de diffusion D inclut :

  - une pluralité de diffuseurs tels que DA1 ayant chacun une entrée telle que A1 et une pluralité de sorties telles que RS et raccordant chacun cette entrée à chacune de ces sorties, et
  - une pluralité de séparateurs spectraux tels que T1 et T2.

Chacun de ces séparateurs tel que T1 a une entrée telle que R1 et une pluralité de sorties telles que A1 et B1 et il reçoit sur cette entrée lesdits paquets multiplexés. Ces sorties sont respectivement associées à des groupes de longueurs d'onde constitués par des fractions respectives de la dite pluralité de longueurs d'onde de travail, ces fractions respectives étant les mêmes pour tous ces séparateurs. Chacun de ces séparateurs transmet, sur chacune de ces sorties, un groupe seulement des paquets qu'il reçoit, ce groupe étant constitué par les paquets ayant une longueur d'onde de support incluse dans le groupe de longueurs d'onde associé à cette sortie.

Chacune des bornes de distribution telle que RS est raccordée à une borne interne primaire telle que R1 par l'ensemble de diffusion D par l'intermédiaire d'un séparateur spectral tel que T1 et d'au moins un diffuseur tel que DA1.

Les entrées de chacun des blocs de sélection tels que BS incluent un groupe de ces entrées pour chacun des groupes de longueurs d'onde et chacun de ces groupes d'entrées inclut une de ces entrées pour chacune des bornes internes primaires, cette entrée étant raccordée à cette borne interne primaire par l'intermédiaire de l'ensemble de diffusion et de l'une des bornes de distribution.

Dans ce deuxième routeur réalisé selon cette invention, il résulte des dispositions particulières ci-dessus que, pour chaque groupe de longueurs d'onde, un groupe d'entrée est constitué par l'ensemble des ports d'entrée ayant une longueur d'onde incluse dans ce groupe de longueurs d'onde et qu'un dit groupe interne est constitué par l'ensemble des bornes de distribution raccordées à des bornes internes primaires par l'intermédiaire de celles des sorties des séparateurs spectraux qui sont associées à ce groupe de longueurs d'onde.

Par ailleurs, dans ce deuxième routeur, les assemblages spectraux ont chacun le nombre b de longueurs d'onde et le nombre de ces assemblages est égal au nombre de ports inclus dans un groupe d'entrée, c'est à dire que, comme dans le premier routeur réalisé selon cette invention, ce nombre peut être limité au rapport n/b.

De préférence, et comme représenté, mais non nécessairement, l'entrée de chacun des séparateurs spectraux tels que T1 est constituée par une borne interne primaire telle que R1. Chaque diffuseur tel que DA1 est alors disposé entre un tel séparateur et la borne de distribution raccordée à cette borne interne primaire ce qui permet de limiter le nombre de tels séparateurs, ce nombre étant alors égal au nombre k des retards. Un amplificateur du type EDFA peut être placé, soit entre chaque sortie telle que A1 ou B1 et le diffuseur tel que DA1 raccordé à cette sortie, soit sur chaque borne primaire telle que R1.

Typiquement, les longueurs d'onde de travail forment une succession sensiblement régulière, chacune de ces longueurs d'onde ayant un rang dans cette succession, et les groupes de longueurs d'onde forment une succession incluant un nombre b de ces groupes, chacun de ces groupes ayant un rang dans cette succession. De préférence alors, chacun de ces groupes de longueurs d'onde inclut sélectivement les longueurs d'onde de travail telles que le rang r de ce groupe et le rang q de chacune de ces longueurs d'onde vérifient l'égalité

$$r = q \bmod b.$$

Les séparateurs spectraux T1 et T2 sont alors des séparateurs périodiques, et plus spécifiquement des filtres ou démultiplexeurs périodiques, de période b. Un tel séparateur a d'une part, en entrée ou en sortie, une borne commune et d'autre part , en sortie ou en entrée, respectivement, un nombre b de bornes particulières, chacune de ces dernières laissant passer une fraction des n longueurs d'onde de travail. Typiquement, une borne particulière de rang i laisse passer à travers le séparateur n/b longueurs d'onde de travail non consécutives ayant les rangs i, i+b, i+2b, etc. Par exemple, dans le cas typique et représenté où n est pair et b = 2, un premier groupe de longueurs d'onde est constitué par les longueurs d'onde de rangs impairs $\lambda 1$, $\lambda 3 ... \lambda n-1$, et un deuxième groupe de longueurs d'onde est constitué par les longueurs d'onde de rangs pairs $\lambda 2, ... \lambda n$.

Une telle disposition peut faciliter la réalisation des séparateurs spectraux inclus dans les sélecteurs de longueurs d'onde, c'est à dire des démultiplexeurs DL et des multiplexeurs ML sous la forme de dispositifs connus sous le nom de démultiplexeurs ou multiplexeurs « de bande» et désignés ci-après « séparateurs de bande». Un tel séparateur a d'une part, en entrée ou en sortie, une borne commune et d'autre part , en sortie ou en entrée, respectivement, un nombre n/b de bornes particulières, chacune de ces dernières laissant passer une fraction des n longueurs d'onde de travail. Typiquement, une borne particulière de rang i laisse passer à travers le séparateur b longueurs d'onde de travail consécutives ayant les rangs compris dans l'intervalle s'étendant du rang b(i-1)+1 au rang b ( i-1) + b , inclusivement. La borne particulière de rang 1 sélectionne les longueurs d'onde $\lambda 1$ et $\lambda 2$, celle de rang 2 sélectionne les longueurs d'onde λ3 et λ4, etc.

En variante les séparateurs spectraux tels que T1 et T2 pourraient être constitués par des séparateurs de bande, tandis que les séparateurs tels que DL et ML seraient des séparateurs périodiques. Typiquement, le rang q d'une longueur d'onde de travail et le rang r du groupe incluant cette longueur d'onde vérifieraient alors l'égalité

$$r = 1 + \text{partie entière de } [(q-1) / (n/b)].$$

Il est souhaité que les routeurs de paquets optiques atteignent des capacités importantes même lorsque le débit d'information par port est donné. Le nombre de leurs ports d'entrée ou de sortie peut donc devenir important, typiquement supérieur à 256. Il est de plus souhaité que ces routeurs atteignent des performances logiques comparables à celles des routeurs de paquets électroniques. C'est pourquoi les combineurs optiques tels que SS inclus dans les blocs de sélection peuvent être de grande taille, typiquement supérieure à 16 vers 1. Cela implique des pertes optiques importantes et par conséquent un rapport signal/bruit trop bas en sortie des sélecteurs de longueur d'onde tels que SL. De plus la recombinaison d'un grand nombre de chemins optiques au sein d'un tel combineur peut entraîner des niveaux excessifs de diaphotie.

C'est pourquoi, selon la présente invention et conformément aux **figures 2, 3 et 6**, le sélecteur de borne de distribution tel que SR de chaque bloc de sélection tel que BS est de préférence réalisé comme suit :

Il inclut comme connu une succession d'interrupteurs optiques ayant des entrées respectives constituant respectivement les entrées tel que RS de ce bloc de sélection. Ces interrupteurs ont aussi des sorties respectives constituant respectivement des sorties d'orientation tel que PR, ces entrées étant respectivement associées à ces sorties. Il inclut aussi comme connu des moyens de combinaison formant des liaisons raccordant respectivement ces sorties d'orientation à la sortie telle que RL de ce sélecteur. Dans le cadre de cette invention ces liaisons incluent des amplificateurs commutés tel que AC1 et AC2. Chacun de ces amplificateurs commutés est raccordé en entrée au moins indirectement à certaines des sorties d'orientation, ces sorties et les entrées associées à ces sorties constituant un groupe amont de cet amplificateur. Ce groupe inclut plusieurs de ces sorties et en exclut plusieurs autres. Ces amplificateurs commutés sont commandés par les ordres de sélection de manière que le gain de chacun de ces amplificateurs soit provisoirement accru lorsque l'une des entrées du groupe amont de cet amplificateur est désignée par l'un de ces ordres.

Toutes les liaisons formées par les moyens de combinaison, ou certaines seulement d'entre elles, peuvent inclure chacune une succession en série de plusieurs amplificateurs commutés ayant chacun plusieurs entrées et une seule sortie, ces entrées appartenant respectivement à plusieurs de ces liaisons. Deux de ces amplificateurs au moins sont consécutifs dans une telle succession. Ils constituent alors respectivement un amplificateur précédent tel que AC1 et un amplificateur suivant tel que AC2, la sortie telle que PQ de cet amplificateur précédent constituant l'une des entrées de cet amplificateur suivant.

La **figure 6** représente à titre d'exemple un ensemble d'amplification commutée CC prévu pour remplacer un combineur tel que SS. Cet ensemble est constitué par trois étages de combineurs du type J vers 1 tels que C1, C2 et C3, respectivement, raccordés par deux ensembles d'amplificateurs commutés incluant respectivement les amplificateurs AC1 et AC2. Le nombre J vaut 4 sur la figure et peut valoir typiquement 4 ou 8. Les amplificateurs tels que AC1 et AC2 sont des amplificateurs optiques semi conducteurs dont les gains peuvent être fortement modifiés avec une vitesse compatible avec l'intervalle de temps séparant deux paquets. Lorsqu'un paquet est transmis vers l'unique sortie RL, seuls les amplificateurs transmettant ce paquet reçoivent un courant d'alimentation leur conférant un gain important. Tous les autres amplificateurs sont alors fortement absorbants, ce qui évite la transmission et la recombinaison de l'émission spontanée qui a été amplifiée dans des amplificateurs en amont. Il en résulte une forte augmentation du rapport de la puissance de signal à la puissance de diaphotie.

Cette invention peut être mise en oeuvre selon des modes autres que ceux qui ont été décrits ci avant. En particulier, lorsque le nombre b des groupes est un nombre relativement grand tel que quatre ou six, la séparation spatiale des groupes peut être mixte, c'est à dire qu'une première telle séparation peut être réalisée en un nombre z de groupes selon le premier de ces deux modes et une deuxième telle séparation en un nombre h de groupes selon le deuxième de ces modes, le nombre de groupes étant alors b = z x h. Par ailleurs, les indications données quant aux types des séparateurs spectraux et aux compositions des groupes de longueurs d'onde l'ont été pour des cas simples, et la réalisation d'un routeur peut, pour des raisons de disponibilité de composants et/ou de nombres de ports imposés par une structure de réseau, s'écarter quelque peu de ces indications, tout en en tirant profit, quant à ces types et/ou quant à ces compositions. Enfin un troisième routeur selon cette invention différerait du deuxième par le fait qu'il ne comporterait pas d'ensemble à retards, son ensemble de diffusion D incluant un seul séparateur spectral tel que T1 raccordé en sortie du multiplexeur ME. Il inclurait une seule dite borne interne primaire dont ledit retard serait nul.

## Revendications

**1.** Routeur de paquets pour réseau de transmission optique, ce routeur incluant des ports d'entrée (E1... E6) pour recevoir des paquets et pour les transmettre sous forme optique avec des longueurs d'onde de support en correspondance avec ces ports d'entrée, ce routeur incluant en outre un ensemble d'entrée (ME, R, D) appliquant des retards à ces paquets et les diffusant à des moyens de sélection spatiale recevant ces paquets et les transmettant à des moyens de sélection spectrale, tous ces moyens faisant sur commande des sélections parmi ces paquets, ces moyens de sélection spectrale faisant des dites sélections selon des assemblages spectraux prédéterminés, chacun de ces assemblages ayant au moins une longueur d'onde et incluant les paquets ayant une longueur d'onde de support égale à une dite longueur d'onde de cet assemblage, chacun de ces paquets étant inclus dans l'un de ces assemblages, ce routeur transmettant en sortie des paquets issus des dites sélections,

ce routeur étant **caractérisé par le fait que** cet ensemble d'entrée comporte un ensemble à retard unique (R), et en ce que cet ensemble d'entrée coopère avec les dits ports d'entrée pour répartir les dits paquets en une pluralité de groupes constitués chacun par certains de ces paquets, le nombre de dites longueurs d'onde de support optiques des paquets de chacun de ces groupes étant une fraction du nombre des dits ports d'entrée et constituant un nombre de longueurs d'onde de ce groupe, cette coopération étant telle que le nombre des dits assemblages spectraux selon lesquels les dits moyens de sélection spectrale font des dites sélections est égal au plus grand des dits nombres de longueurs d'onde de ces groupes.

**2.** Routeur de paquets selon la revendication 1, ce routeur étant adapté à être inclus dans un réseau de transmission d'informations acheminant des signaux constituant respectivement des dits paquets, chacun de ces paquets portant des informations à transmettre et étant muni d'une étiquette de routage, ce paquet étant apte à être porté par des ondes optiques ayant des longueurs d'onde respectives, ladite longueur d'onde d'une onde optique portant ce paquet constituant ladite longueur d'onde de support de ce paquet, ce routeur ayant une pluralité de longueurs d'onde de travail et incluant :

-   une pluralité de dits ports d'entrée (E1...E6), chacun de ces ports d'entrée ayant l'une des dites longueurs d'onde de travail et étant disposé pour recevoir des dits paquets se succédant au cours du temps,
-   un ensemble de multiplexage d'entrée (ME) disposé pour recevoir les dits paquets en sortie des dits ports d'entrée, cet ensemble ayant au moins une sortie et étant adapté à transmettre sur chaque sortie de cet ensemble des dits paquets ayant été reçus par cet ensemble et ayant des longueurs d'onde de support respectives mutuellement différentes,

-   un ensemble à retards (R) disposé pour recevoir les dits paquets en sortie du dit ensemble de multiplexage d'entrée, cet ensemble à retards ayant un assemblage de sorties constituant respectivement des bornes internes primaires (A1... B2 - R1, R2), ces bornes ayant des retards respectifs, cet ensemble à retards étant adapté à transmettre chacun de ces paquets sur chacune de ces bornes avec un retard égal au dit retard de cette borne,

-   un ensemble de diffusion (D) raccordant chacune des dites bornes internes primaires à une pluralité de bornes de distribution (RS) ayant chacune un retard constitué par ledit retard de cette borne interne primaire, ledit ensemble de multiplexage d'entrée, ledit ensemble à retards et cet ensemble de diffusion constituant ledit ensemble d'entrée, cet ensemble coopérant avec les dits ports d'entrée pour former des liaisons reliant ces ports à ces bornes de distribution,

-   une pluralité de blocs de sélection (BS), chacun de ces blocs ayant une pluralité d'entrées, ces entrées étant constituées par une pluralité de dites bornes de distribution et ayant les dits retards de ces bornes, respectivement, les dites liaisons étant telles que, pour chacun de ces blocs, chaque dit paquet reçu par l'un de ces ports est transmis par l'une de ces liaisons de ce port à l'une des dites entrées de ce bloc, ce bloc étant apte à recevoir des ordres de sélection le désignant, chacun de ces ordres désignant en outre l'un des dits ports d'entrée et l'une des dites entrées de ce bloc, ce bloc étant apte à répondre à chacun de ces ordres en sélectionnant l'un des dits paquets reçus sur ses dites entrées, ladite longueur d'onde de support de ce paquet sélectionné étant ladite longueur d'onde du port d'entrée désigné par cet ordre et cette entrée étant ladite entrée de ce bloc désignée par cet ordre, ce bloc ayant une sortie (S1) constituant un port de sortie dudit routeur, ce bloc étant adapté à transmettre ce paquet sélectionné sur cette sortie et incluant pour cela :

-   un sélecteur de borne de distribution (SR) ayant d'une part une pluralité d'entrées respectivement constituées par les dites entrées (RS) de ce bloc et d'autre part une sortie (RL), ce sélecteur constituant un dit moyen de sélection spatiale et étant adapté à recevoir ceux des dits ordres de sélection qui désignent ce bloc de sélection et à répondre à chaque tel ordre en raccordant cette sortie à celle de ces entrées qui est désignée par cet ordre, et

- un sélecteur de longueur d'onde (SL) ayant une entrée constituée par ladite sortie (RL) du sélecteur de borne de distribution, ce sélecteur de longueur d'onde ayant une sortie constituant ladite sortie (S1) du bloc de sélection, ce sélecteur constituant un dit moyen de sélection spectrale et étant adapté à recevoir ceux des dits ordres de sélection qui désignent ce bloc de sélection et à répondre à chaque tel ordre en transmettant de son entrée à sa sortie sélectivement celui des dits paquets dont la longueur d'onde de support est la longueur d'onde du port d'entrée désigné par cet ordre,

ce routeur incluant en outre un organe de gestion (G) sensible aux dites étiquettes de routage et à des données de trafic reçues dudit réseau de transmission, cet organe étant adapté à répondre à l'étiquette de routage de chacun des dits paquets reçus par ce routeur en émettant un ordre de sélection concernant ce paquet, cet ordre désignant celui des dits ports d'entrée qui a reçu ce paquet et désignant en outre selon les dites données de trafic l'un au moins des dits blocs de sélection et l'une des dites entrées de ce bloc,

ce routeur étant **caractérisé par le fait que** les dites liaisons formées par ledit ensemble d'entrée en coopération avec les dits ports d'entrée réalisent d'une part un partage de l'ensemble de ces ports d'entrée (E1...E6) en une pluralité de groupes d'entrée (E1...E3 - E4...E6) constitués chacun d'une pluralité de ces ports et d'autre part un partage de l'ensemble des dites bornes de distribution en une pluralité de groupes internes respectivement associés à ces groupes d'entrée et incluant chacun au moins une telle borne, les dites longueurs d'onde des ports de chacun de ces groupes d'entrée formant une succession de longueurs d'onde mutuellement différentes et respectivement propres à une succession de ces ports, les dites bornes de distribution de chacun de ces groupes internes constituant des bornes de ce groupe, les retards respectifs de ces bornes étant mutuellement différents et formant une succession de retards de ce groupe interne, les dits partages étant réalisés **par le fait que** ces liaisons relient les ports d'un dit groupe d'entrée seulement aux bornes du dit groupe interne associé à ce groupe d'entrée et relient ces bornes seulement à ces ports.

3. Routeur de paquets selon la revendication 2, ce routeur étant **caractérisé par le fait que** la différence entre chacun des nombres respectifs des ports inclus dans les dits groupes d'entrée et le rapport du nombre total des ports d'entrée au nombre de ces groupes est inférieure en valeur absolue à ce nombre de groupes.

4. Routeur de paquets selon la revendication 3, ce routeur étant **caractérisé par le fait que** le nombre b des dits groupes d'entrée (E1...E3 - E4...E6) est au moins égal à deux et au plus égal à 64.

5. Routeur de paquets selon la revendication 4, ce routeur étant **caractérisé par le fait que** le nombre b des dits groupes (E1...E3 - E4...E6) d'entrée est le plus grand de deux nombres, un premier de ces deux nombres étant compris entre 25% et 400% de la racine carrée $\sqrt{(n/k)}$ du rapport du nombre n des dits ports d'entrée au nombre k des retards de la dite succession de retards, un deuxième de ces deux nombres étant égal à ce nombre n divisé par 16.

6. Routeur de paquets selon la revendication 2, ce routeur étant **caractérisé par le fait que** tous les dits groupes internes ont une même dite succession de retards.

7. Routeur de paquets selon la revendication 2, ce routeur étant **caractérisé par le fait que** les dites longueurs d'onde des ports d'entrée inclus dans chacun des dits groupes d'entrée (E1...E3 - E4... E6) forment une succession spectrale constituée de longueurs d'onde mutuellement différentes et au moins une majorité des longueurs d'onde de cette succession est incluse dans ladite succession spectrale de chacun des autres dits groupes d'entrée,

le dit ensemble de multiplexage d'entrée (ME) incluant un multiplexeur d'entrée (MF, MG) pour chacun de ces groupes d'entrée, ce multiplexeur constituant un multiplexeur de ce groupe et étant disposé pour recevoir les dits paquets transmis par les ports de ce groupe et pour multiplexer ces paquets en longueur d'onde, ce multiplexeur ayant une sortie (NF, NG) pour transmettre ces paquets multiplexés,

ledit ensemble à retards (R) incluant pour chacun de ces groupes d'entrée un bloc à retards (RA, RB) pour recevoir les dits paquets multiplexés transmis par ladite sortie du multiplexeur de ce groupe, ce bloc ayant pour chacun des dits retards une dite borne interne primaire (A1...B2) ayant ce retard,

ledit ensemble de diffusion (D) incluant pour chacun des dits retards et pour chacun des dits blocs à retards un diffuseur (DA1) raccordant ladite borne interne primaire (A1) ayant ce retard à une pluralité de dites bornes de distribution (RS) ayant ce retard, ce diffuseur constituant un diffuseur de cette borne interne primaire,

les dites entrées de chacun des dits blocs de sélection (BS) incluant un groupe de ces entrées pour chacun des dits groupes d'entrée, chacun de ces groupes d'entrées de ce bloc incluant une de ces entrées pour chacune des dites bornes internes primaire (A1), cette entrée étant constituée par l'une des dites bornes internes secondaires (RS) et étant raccordée à cette borne interne primaire par l'intermédiaire du dit diffuseur (DA1) de cette borne interne primaire.

8. Routeur de paquets selon la revendication 2, ce routeur étant **caractérisé par le fait que** les dites longueurs d'onde des ports d'entrée (E1... E6) forment une succession spectrale constituée de longueurs d'onde mutuellement différentes,

ledit ensemble de multiplexage d'entrée incluant un multiplexeur (ME) disposé pour recevoir les dits paquets transmis par les dits ports d'entrée et pour multiplexer ces paquets en longueur d'onde, cet ensemble ayant une sortie (NE) pour transmettre ces paquets multiplexés,

ledit ensemble à retards incluant un seul bloc à retards (R) disposé pour recevoir les dits paquets multiplexés, ce bloc ayant pour chacun des dits retards une dite borne interne primaire (R1, R2) ayant ce retard,

ledit ensemble de diffusion (D) incluant :

- une pluralité de diffuseurs (DA1) ayant chacun une entrée (A1) et une pluralité de sorties et raccordant chacun cette entrée à chacune de ces sorties, et
- une pluralité de séparateurs spectraux (T1, T2), chacun de ces séparateurs (T1) ayant une entrée (R1) et une pluralité de sorties (A1, B1) et étant disposé pour recevoir sur cette entrée les dits paquets multiplexés, ces sorties étant respectivement associées à des groupes de longueurs d'onde constitués par des fractions respectives de la dite pluralité de longueurs d'onde de travail, ces fractions successives étant les mêmes pour tous ces séparateurs, chacun de ces séparateurs étant adapté à transmettre sur chacune de ces sorties un groupe seulement des dits paquets, ce groupe étant constitué par les dits paquets ayant une dite longueur d'onde de support incluse dans le dit groupe de longueurs d'onde associé à cette sortie,

chacune des dites bornes de distribution (RS) étant raccordée à une dite borne interne primaire (R1) par le dit ensemble de diffusion (D) par l'intermédiaire d'un dit séparateur spectral (T1) et d'au moins un dit diffuseur (DA1),

les dites entrées (RS) de chacun des dits blocs de sélection (BS) incluant un groupe de ces entrées pour chacun des dits groupes de longueurs d'onde, chacun de ces groupes d'entrées de ce bloc incluant une de ces entrées pour chacune des dites bornes internes primaires, cette entrée (RS) étant constituée par l'une des dites bornes de distribution et étant raccordée à cette borne interne primaire par l'intermédiaire du dit ensemble de diffusion,

grâce à quoi, pour chacun des dits groupes de longueurs d'onde, un dit groupe d'entrée est constitué par l'ensemble des dits ports d'entrée ayant une longueur d'onde incluse dans ce groupe de longueurs d'onde et un dit groupe interne est constitué par l'ensemble des dites bornes de distribution raccordées à des dites bornes internes primaires par l'intermédiaire de celles des dites sorties des séparateurs spectraux qui sont associées à ce groupe de longueurs d'onde.

9. Routeur de paquets selon la revendication 8, ce routeur étant **caractérisé par le fait que** la dite entrée (R1) de chacun des dits séparateurs spectraux (T1) est constituée par une dite borne interne primaire.

10. Routeur de paquets selon la revendication 8, les dites longueurs d'onde de travail formant une succession sensiblement régulière, chacune de ces longueurs d'onde ayant un rang dans cette succession, les dits groupes de longueurs d'onde formant une succession incluant un nombre b de ces groupes, chacun de ces groupes ayant un rang dans cette succession,

ce routeur étant **caractérisé par le fait que** certains au moins de ces groupes de longueurs d'onde incluent chacun une pluralité de dites longueurs d'onde de travail telles que le rang r de ce groupe et le rang q de chacune de ces longueurs d'onde vérifient l'égalité

$$r = q \text{ modulo } b.$$

11. Routeur de paquets selon la revendication 8, ledit sélecteur de longueur d'onde (SL) de chaque dit bloc de sélection (BS) incluant :

- au moins un séparateur spectral (ML) ayant, d'une part une borne commune (S1) et d'autre part une pluralité de bornes particulières constituant des bornes de longueur d'onde (LL) respectivement associées à certaines au moins des dites longueurs d'onde de travail, ce séparateur étant apte à transmettre sélectivement entre cette borne commune et chacune de ces bornes de longueur d'onde ceux des dits paquets dont la longueur d'onde de support est associée à cette borne, et
- un sélecteur de borne de longueur d'onde (BL) ayant au moins une pluralité de bornes respectivement constituées par des dites bornes de longueurs d'onde d'un séparateur spectral, ce sélecteur étant adapté à recevoir un dit ordre de sélection désignant ce bloc de sélection et un dit port d'entrée et à répondre à cet ordre en permettant la transmission de dits paquets via sélectivement au moins une dite borne de ce sélecteur associée à ladite longueur d'onde de ce port,

ce routeur étant **caractérisé par le fait que** chaque dit séparateur spectral du sélecteur de longueur d'onde est un séparateur de bandes, les dits séparateurs spectraux (T1, T2) de l'ensemble de diffusion (D) étant des séparateurs périodiques.

**12.** Routeur de paquets selon la revendication 8, les dites longueurs d'onde de travail formant une succession sensiblement régulière, chacune de ces longueurs d'onde ayant un rang dans cette succession, les dits groupes de longueurs d'onde formant une succession incluant un nombre b de ces groupes, chacun de ces groupes ayant un rang dans cette succession,

ce routeur étant **caractérisé par le fait que** certains au moins de ces groupes de longueurs d'onde incluent chacun une pluralité de dites longueurs d'onde de travail telles que le rang r de ce groupe et le rang q de chacune de ces longueurs d'onde vérifient l'égalité

$$r = 1 + \text{partie entière de } [(q-1)/(n/b)].$$

**13.** Routeur de paquets selon la revendication 8, ledit sélecteur de longueur d'onde (SL) de chaque dit bloc de sélection (BS) incluant :

- au moins un séparateur spectral (ML) ayant, d'une part une borne commune (S1) et d'autre part une pluralité de bornes particulières constituant des bornes de longueur d'onde (LL) respectivement associées à certaines au moins des dites longueurs d'onde de travail, ce séparateur étant apte à transmettre sélectivement entre cette borne commune et chacune de ces bornes de longueur d'onde ceux des dits paquets dont la longueur d'onde de support est associée à cette borne, et
- un sélecteur de borne de longueur d'onde (BL) ayant au moins une pluralité de bornes respectivement constituées par des dites bornes de longueurs d'onde d'un séparateur spectral, ce sélecteur étant adapté à recevoir un dit ordre de sélection désignant ce bloc de sélection et un dit port d'entrée et à répondre à cet ordre en permettant la transmission de dits paquets via sélectivement au moins une dite borne de ce sélecteur associée à ladite longueur d'onde de ce port,

ce routeur étant **caractérisé par le fait que** chaque dit séparateur spectral du sélecteur de longueur d'onde est un séparateur périodique, les dits séparateurs spectraux (T1, T2) de l'ensemble de diffusion (D) étant des séparateurs de bandes.

**14.** Routeur de paquets selon la revendication 2, ledit sélecteur de borne de distribution (SR) de chaque dit bloc de sélection (BS) incluant :

- une succession d'interrupteurs optiques ayant des entrées respectives constituant respectivement les dites entrées (RS) de ce bloc de sélection, ces interrupteurs ayant des sorties respectives constituant respectivement des sorties d'orientation (PR), ces entrées étant respectivement associées à ces sorties, et
- des moyens de combinaison formant des liaisons raccordant respectivement ces sorties d'orientation à ladite sortie (RL) de ce sélecteur,

ce routeur étant **caractérisé par le fait que** les dits moyens de combinaison incluent des amplificateurs commutés (AC1), chacun de ces amplificateurs commutés étant raccordé en entrée au moins indirectement à certaines des dites sorties d'orientation, ces sorties et les dites entrées associées à ces sorties constituant un groupe amont de cet amplificateur, ce groupe incluant plusieurs de ces sorties et excluant plusieurs autres de ces sorties, ces amplificateurs commutés étant commandés par les dits ordres de sélection de manière que le gain de chacun de ces amplificateurs soit provisoirement accru lorsque l'une des dites entrées du groupe amont de cet amplificateur est désignée par l'un de ces ordres.

**15.** Routeur de paquets selon la revendication 14, ce routeur étant **caractérisé par le fait que** certaines au moins des dites liaisons formées par les dits moyens de combinaison incluent chacune une succession en série de plusieurs dits amplificateurs commutés ayant chacun plusieurs entrées et une seule sortie, ces entrées appartenant respectivement à plusieurs de ces liaisons, deux de ces amplificateurs au moins étant consécutifs dans cette succession et constituant respectivement un amplificateur précédent (AC1) et un amplificateur suivant (AC2), la dite sortie (PQ) de cet amplificateur précédent constituant l'une des dites entrées de cet amplificateur suivant.

**16.** Routeur de paquets selon la revendication 8, ce routeur incluant une seule dite borne interne primaire, ledit retard de cette borne étant nul.

Fig.1

Fig.2

Fig.3

Fig.4

Fig.5

Fig. 6

**Office européen des brevets**

# RAPPORT DE RECHERCHE EUROPEENNE

Numéro de la demande

EP 01 40 2658

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,Y | MAENO Y ET AL: "A 2.56-TB/S MULTIWAVELENGTH AND SCALABLE SWITCH-FABRIC FOR FAST PACKET-SWITCHING NETWORKS" IEEE PHOTONICS TECHNOLOGY LETTERS, IEEE INC. NEW YORK, US, vol. 10, no. 8, 1 août 1998 (1998-08-01), pages 1180-1182, XP000769894 ISSN: 1041-1135 | 1 | H04Q11/00 |
| A | * alinéas 'OOII!,'OIII!; figure 1 * | 2-16 | |
| Y | DANIELSEN S L ET AL: "WAVELENGTH CONVERSION IN OPTICAL PACKET SWITCHING" JOURNAL OF LIGHTWAVE TECHNOLOGY, IEEE. NEW YORK, US, vol. 16, no. 12, décembre 1998 (1998-12), pages 2095-2108, XP000833956 ISSN: 0733-8724 | 1 | |
| A | * page 2097, alinéa B; figure 4 * | 2-16 | |
| A | ISHIDA O ET AL: "PARALLEL-OPTICAL-INTERCONNECTING MULTIWAVELENGTH STAR NETWORK (POIMS NET) FOR HIGH-CAPACITY SWITCHING" ELECTRONICS LETTERS, IEE STEVENAGE, GB, vol. 32, no. 19, 12 septembre 1996 (1996-09-12), pages 1804-1806, XP000638838 ISSN: 0013-5194 * figure 1 * | 1-16 | |
| A | EP 0 852 437 A (NIPPON ELECTRIC CO) 8 juillet 1998 (1998-07-08) * page 2, ligne 1 - page 3, ligne 47; figure 2 * | 1-16 | |

**DOMAINES TECHNIQUES RECHERCHES (Int.Cl.7)**

H04Q

Le présent rapport a été établi pour toutes les revendications

| Lieu de la recherche | Date d'achèvement de la recherche | Examinateur |
|---|---|---|
| LA HAYE | 13 mars 2002 | Meurisse, W |

**ANNEXE AU RAPPORT DE RECHERCHE EUROPEENNE
RELATIF A LA DEMANDE DE BREVET EUROPEEN NO.**

EP 01 40 2658

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

13-03-2002

| Document brevet cité au rapport de recherche | Date de publication | Membre(s) de la famille de brevet(s) | Date de publication |
|---|---|---|---|
| EP  0852437      A | 08-07-1998 | JP      3139540 B2 | 05-03-2001 |
|  |  | JP    11018118 A | 22-01-1999 |
|  |  | EP      0852437 A2 | 08-07-1998 |
|  |  | US      6243178 B1 | 05-06-2001 |

EPO FORM P0460

Pour tout renseignement concernant cette annexe : voir Journal Officiel de l'Office européen des brevets, No.12/82